Europäisches Patentamt

European Patent Office

Office européen des brevets

(19)

(11) Publication number: **0 307 511 B1**

(12) **EUROPEAN PATENT SPECIFICATION**

(45) Date of publication of patent specification: **02.01.92**

(21) Application number: **87117578.2**

(22) Date of filing: **17.08.83**

(51) Int. Cl.⁵: **F16H 61/04**

(60) Publication number of the earlier application in accordance with Art.76 EPC: **0 103 751**

(54) **Automatic transmission.**

(30) Priority: **20.08.82 JP 143288/82**

(43) Date of publication of application:
**22.03.89 Bulletin 89/12**

(45) Publication of the grant of the patent:
**02.01.92 Bulletin 92/01**

(84) Designated Contracting States:
**DE FR GB**

(56) References cited:
**EP-A- 0 026 925**
**DE-A- 2 226 684**
**GB-A- 2 028 937**
**US-A- 4 065 985**

(73) Proprietor: **NISSAN MOTOR CO., LTD.**
**No.2, Takara-cho, Kanagawa-ku**
**Yokohama City(JP)**

(72) Inventor: **Sugano, Kazuhiko**
**No. 3-4688-1 Sobudai Zama**
**City(JP)**

(74) Representative: **Patentanwälte Grünecker,**
**Kinkeldey, Stockmair & Partner**
**Maximilianstrasse 58**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 307 511 B1

**Description**

The present invention relates to an automatic transmission and a control system therefore, respectively, according to the preamble part of the main claim as disclosed in EP-A 0026 925.

It is a well-known technique to provide an accumulator in a hydraulic control system for an automatic transmission so as to alleviate a shock which takes place inherently during shift by gradually increasing a fluid pressure supplied to fluid operated friction units. In the case of a conventional automatic transmission, for example, a 4-speed automatic transmission, in order to alleviate a shock taking place during a downshift from the fourth speed ratio to the third speed ratio, the second speed ratio or the first speed ratio (i.e., 4-3 downshift, 4-2 downshift or 4-1 downshift) and a shock taking place when a manual valve is moved from an "N" position thereof to a "D" position thereof, a plurality of accumulators are required, each being adapted to operate during one of these shifts. However, providing the plurality of accumulators creates a problem that a hydraulic circuit becomes complicated and a large space is required for the installation of the accumulators.

It is, therefore, an object of the present invention to provide an automatic transmission and a hydraulic control system therefore, respectively, according to the preamble part of the main claim, which has a single accumulator that is operable to alleviate a shock taking place during a downshift from the highest speed ratio to any one of the lower speed ratios and a shock taking place when the transmission shifts from a neutral thereof to a forward drive.

The solution of this object is achieved by the features of the main claim.

BRIEF DESCRIPTION OF THE DRAWINGS

Fig. 1 is a schematic view of a power transmission mechanism of a four speed automatic transmission as illustrated in connection with an engine which has a throttle mounted in an intake passage and an accelerator pedal; and

Figs. 2(a), 2(b), 2(c) and 3, when combined, illustrate a circuit diagram of a preferred embodiment of a hydraulic control system for the automatic transmission according to the present invention.

DETAILED DESCRIPTION OF THE INVENTION

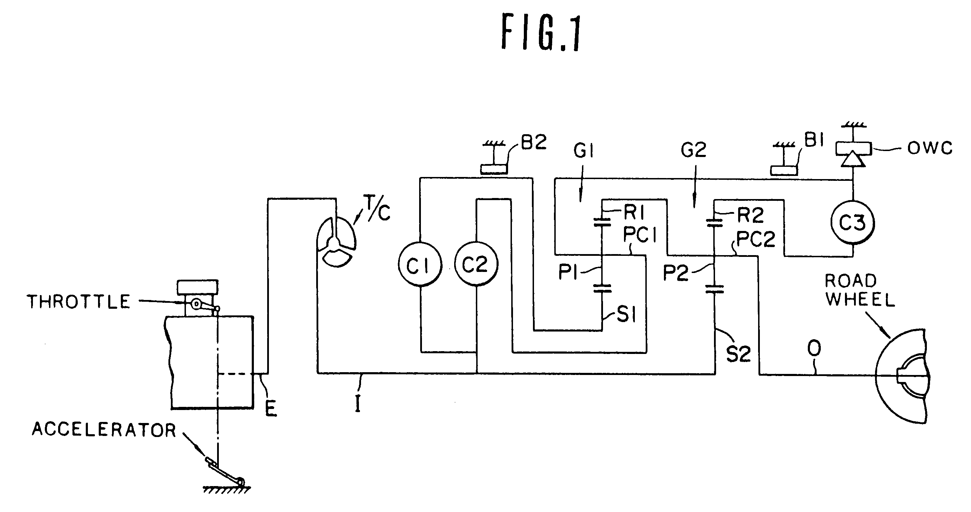

Referring to Fig. 1, there is illustrated a power transmission mechanism of a four forward speed and one reverse speed automatic transmission having an overdrive. This power transmission mechanism comprises an input shaft I operatively connected via a torque converter T/C to an engine output shaft E of an engine which has a throttle which opens in degrees, an output shaft O operatively connected to road wheels, only one being shown, via a final drive, not shown. A first planetary gear set G1 and a second planetary gear set G2 are connected between the input and output shafts I and O. A plurality of fluid operated friction units are provided which are made operative and inoperative for producing a plurality of speed ratios between the input shaft I and output shaft O. The fluid operated frictional units include a first clutch C1, a second clutch C2, a third clutch C3, a first brake B1, a second brake B2, and a one-way clutch OWC. The first planetary gear set G1 comprises a sun gear S1, an internal gear R1, a carrier PC1 carrying pinion gears P1 meshing simultaneously both the gears S1 and R1. The planetary gear set G2 comprises a sun gear S2, an internal gear R2 and a carrier PC2 carrying pinion gears P2 meshing simultaneouly both gears S2 and R2. The carrier PC1 is connectable via the clutch C1 with the input shaft I, and the sun gear S1 is connectable via the clutch C2 with the input shaft I. The carrier PC1 is connectable via the clutch C3 with the internal gear R2. The sun gear S2 is constantly connected with the input shaft I. The internal gear R1 and carrier PC2 are constantly connected with the output shaft O. The brake B1 is arranged to anchor the carrier PC1. The brake B2 is arranged to anchor the sun gear S1. The one-way clutch OWC is so constructed that it allows forward rotation (i.e., the same rotation as that of the engine output shaft E), but prevents reverse rotation (i.e., the rotation opposite to the forward rotation). Thus, it acts as a brake only during reverse rotation.

In the above mentioned power transmission mechanism, the rotational state of each of the rotary elements (S1, S2, R1, R2, PC1, and PC2) of the planetary gear sets G1 and G2 can be varied by actuating selected one or combination of the cluthes C1, C2 and C3, brake B1, (one-way clutch OWC) and brake B2, thus varying the revolution speed of the output shaft O relative to that of the input shaft I. The four forward speed ratios and one reverse speed ratio are produced if the clutches C1, C2 and C3 and brakes B1 and B2 are engaged in the manner as shown in the following Table.

2

## Table

| | C1 | C2 | C3 | B1 (DWC) | B2 | Gear Ratio | $\alpha 1 = 0.45$ $\alpha 2 = 0.45$ |
|---|---|---|---|---|---|---|---|
| 1st speed | | | o | o | | $\dfrac{1 + \alpha 2}{\alpha 2}$ | 3.22 |
| 2nd speed | | | o | | o | $\dfrac{\alpha 1 + \alpha 2}{\alpha 2 (1 + \alpha 1)}$ | 1.38 |
| 3rd speed | | o | o | | | 1 | 1 |
| 4th speed | | o | | | o | $\dfrac{1}{1 + \alpha 1}$ | 0.69 |
| Reverse | o | | | o | | $-\dfrac{1}{\alpha 1}$ | -2.22 |

In the above Table, a sign "o" denotes actuation state of the clutch or brake, $\alpha 1$ and $\alpha 2$ respectively denote ratios of number of teeth of the internal gears R1 and R2 to number of teeth of the corresponding sun gears S1 and S2. A gear ratio is a ratio of the revolution number of the input shaft I to that of the output shaft O. What is denoted by the label (OWC) below the brake B1 means that the first speed ratio is produced owing to the action of the one-way clutch OWC even if the brake B1 is not applied. However, in this first speed ratio, it is not possible for the output shaft O to drive the engine (that is, no engine braking is effected).

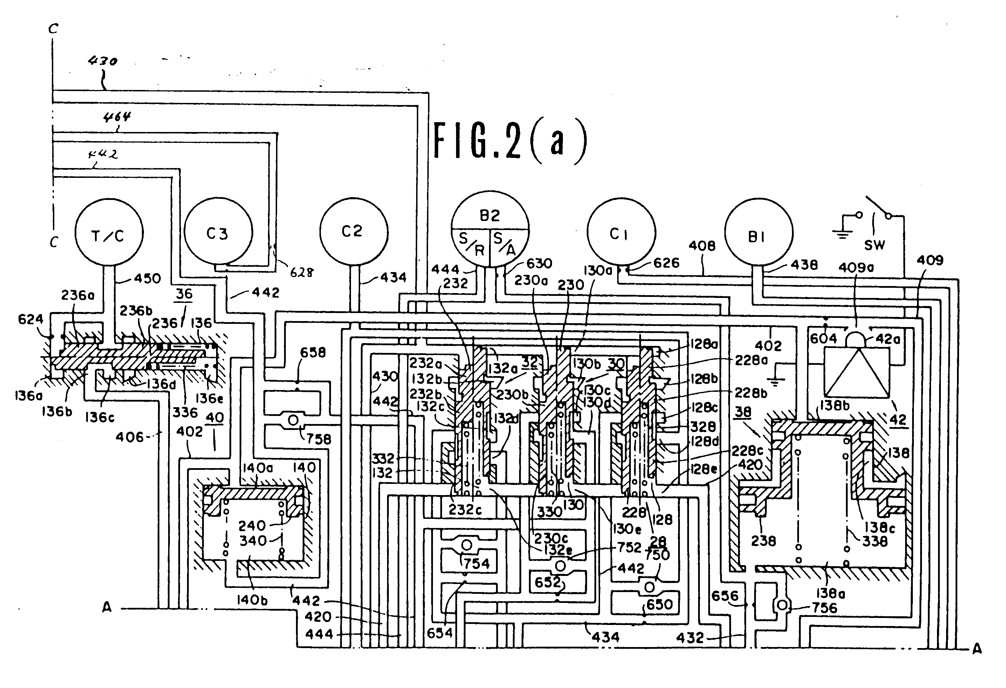

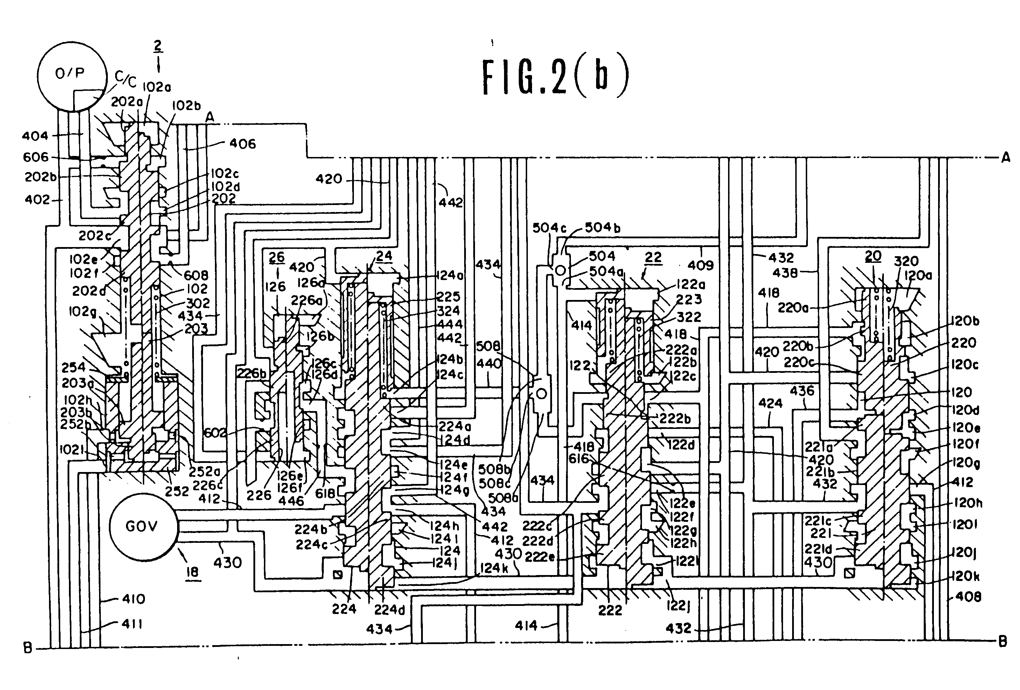

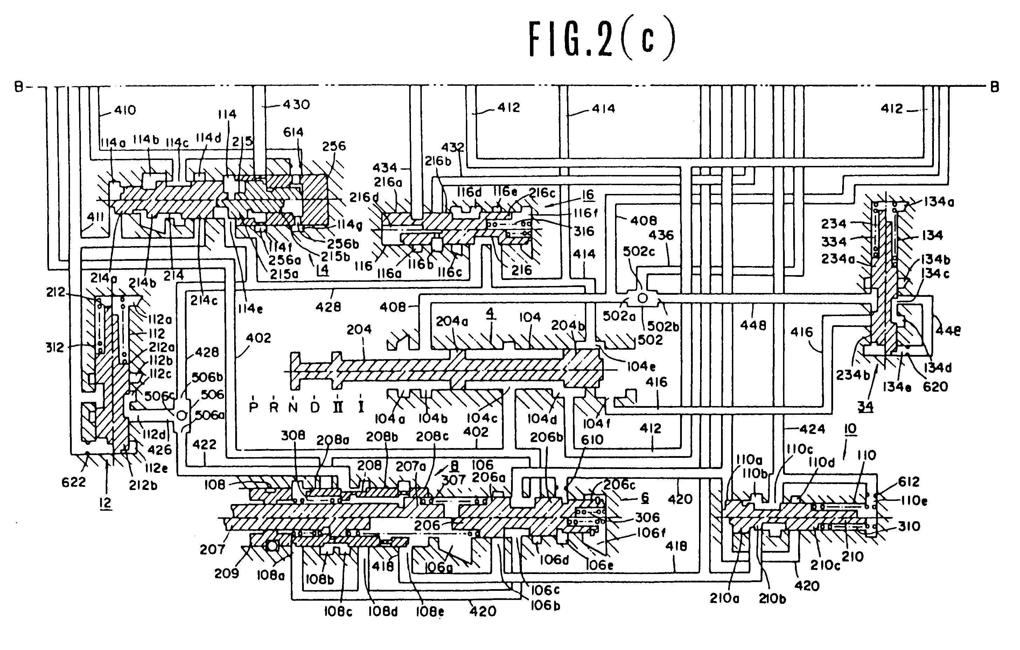

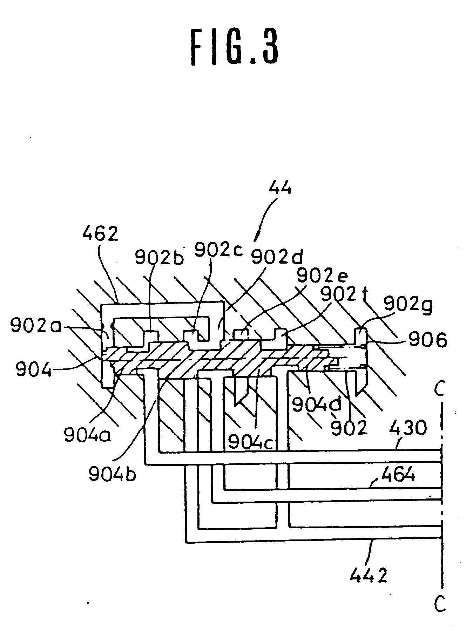

Referring to Figs. 2(a), 2(b), 2(c), and 3, a hydraulic control system for the above power transmission mechanism is described.

This hydraulic control system comprises a regulator valve 2, a manual valve 4, a throttle valve 6, a throttle fail safe valve 8, a throttle modulator valve 10, a pressure modifier valve 12, a cut back valve 14, a line pressure booster valve 16, a governor valve 18, a 1-2 shift valve 20, a 2-3 shift valve 22, a 3-4 shift valve 24, a 2-4 timing valve 26, a 2-3 timing valve 28, a 3-4 timing valve 30, a 3-2 timing valve 32, a first manual range pressure reducing valve 34, a torque converter pressure reducing valve 36, a 1-2 accumulator 38, a 4-3 accumulator 40, an overdrive inhibitor solenoid 42, and a centrifugal force offset valve 44 (see Fig. 3). These valves are interconnected as shown in Figs. 2(a), 2(b), 2(c), and 3, and connected with an oil pump O/P, the torque converter T/C, clutches C1, C2 and brakes B1 and B2 as shown. The brake B2 has a servo apply chamber S/A, i.e., a fluid pressure chamber designed to apply the brake when pressurized, and a servo release chamber S/R, i.e., a fluid pressure chamber designed to release the brake when pressurized. Since the servo release chamber S/R has a larger pressure acting area than a pressure acting area of the servo apply chamber S/A, the brake B2 is released when the pressure is supplied to the servo release chamber S/R irrespective of the supply of fluid pressure to the servo apply chamber S/A. The overdrive inhibitor solenoid 42 is electrically connected with an overdrive inhibitor switch SW.

A portion shown in Figs. 2(a), 2(b) and 2(c) of the hydraulic control is described in co-pending U.S. application Ser. No. Unknown (attorney's Case No. 83SUG389RLS/ISP), filed July 29, 1983 (see FIG. 2(a), 2(b) and 2(c)) and commonly assigned herewith, the disclosure of which application is hereby incorporated by reference in its entirety. Alternatively, it is described in co-pending European application Ser. No. Unknown (Representative's Ref.: EP 1193-30/dg), filed July 29, 1983 by the same applicant of the present application, the disclosure of which application is hereby incorporated by reference in its entirety.

The names of parts denoted by the reference numerals in Figs. 2(a), 2(b) and 2(c) are hereinafter listed. The reference numerals 102, 104, 106, 108, 110, 112, 114, 116, 120, 122, 124, 126, 128, 130, 132, 1334 and 136 denote valve bores, the reference numerals 102a~j, 104a~f, 106a~f, 108a~e, 110a~e, 112a~e, 114a~g, 116a~f, 120a~k, 122a~j, 124a~k, 126a~e, 130a~e, 132a~e, and 136a~e ports, the reference numerals 138 and 140 cylinder bores, the reference numerals 202, 203, 204, 206, 210, 212, 214, 215, 216, 220, 221, 222, 224, 226, 228, 230, 232, 234, and 236 spools, the reference numerals 202a~d, 203a~b, 204a~b, 206a~c, 208a, 210a~c, 212a~b, 214a~c, 215a~b, 216a~c, 220a~c, 221a~d, 222a~e, 224a~d, 226a~c, 228a~c, 230a~c, 232a~c, 234a~b, and 236a~b lands, the reference numeral 207 plunger, the reference numeral 208 sleeve, the reference numeral 209 plug, the reference numerals 223 and 225 plugs, the reference numeral 238 and 240 pistons, the reference numeral 252 sleeve, the reference numeral 252a~c ports, the reference numeral 254 spring seat, the reference numerals 302, 306, 307, 308, 310, 312, 316, 320, 322, 324, 328, 330, 332, 334, 336, 338, and 340 springs, the reference numerals 402, 404, 406, 408, 409, 410, 411, 412, 414, 416, 418, 420, 422, 424, 426, 428, 430, 432, 434, 436, 438, 440, 442, 444, 446, 448 and 450 oil conduits, the reference numerals 502, 504, 506 and 508 shuttle valves, the reference numerals 602, 604, 606, 608, 610, 612, 614, 616, 618, 620, 622, 624, 626, 628, 630, 650, 652, 654, 656 and 658 orificies, and the reference numerals 750, 752, 754, 756 and 758 check valves.

Referring to Fig. 3, the centrifugal force offset valve 44 embodying the present invention comprises a valve bore 902 having five ports 902a to 902g, a valve member in the form of a spool 904 having four lands 904a to 904d (the lands 904b and 904c are of the same diameter and the lands 904a and 904d are of smaller diameter than the former two), and a spring 906 biasing the spool 904 to the left as viewed in Fig. 3. The ports 902a and 902d communicate with each other by a fluid conduit 462, and the port 902d communicates with the clutch C3 via a fluid conduit 464. The port 902b communicates with a fluid conduit 430 which defines a part of a governor pressure circuit. The port 902c and port 902f communicate with a fluid conduit 442. This fluid conduit 442 communicates with the 3-4 shift valve 24 and is always supplied with fluid pressure to establish first, second and third speed ratios. The ports 902e and 902g are drain ports, respectively.

The operation is described hereinafter.

As apparent from the preceding Table, the clutch C2 and brake B2 are actuated in the fourth speed ratio. Under this condition, the clutch drum of the clutch C3 rotates at high speeds and is subject to a centrifugal force which is proportional to the square of the rotational speed of the clutch drum. When, under this condition, the 3-4 shift valve 24 (see Fig. 2(b)) shifts from an upshift position thereof, as illustrated by the left half thereof in Fig. 2(b), to a downshift position thereof, as illustrated by the right half thereof in Fig. 2(b), the fluid pressure (line pressure) is supplied to the fluid conduit 442. When the fluid pressure is supplied to the fluid conduit 442, the spool 904 of the centrifugal force offset valve 44 assumes a state indicated by the bottom half thereof in Fig. 3 wherein pressure regulation is effected by using the line pressure in the port 902c as a source of fluid pressure and the port 902e as a drain port. When the spool 904 assumes this state, the fluid pressure Pr in the ports 902a and 902d is regulated to such a value that the sum of a rightwardly directed force, viewing in Fig. 3, due to the fluid pressure (Pr) in the port 902a and a rightwardly directed force, as viewed in Fig. 3, due to the fluid pressure (governor pressure PG) in the port 902a balances with the sum of a leftwardly directed force, as viewed in Fig. 3, due to the fluid pressure (line pressure PL) in the port 902f and a leftwardly directed force, as viewed in Fig. 3, due to the spring 906. The above mentioned fluid pressure Pr is determined by the following equation.

Assuming that the area of the land 904a is S1, a differential area between the lands 904a and 904b is S2, a differential area between the lands 904c and 904d is S3 (S3 = S1), and a force of the spring 906 is f, then

$$Pr \cdot S1 + PG \cdot S2 = PL \cdot S3 + f$$
$$Pr = (S3/S1) \cdot PL - (S2/S1) \cdot PG + f/S1.$$

Since S3 = S1,

$$Pr = PL - (S2/S1) \cdot PG + f/S1.$$

Since the force f of the spring 906 is set very small, then

$$Pr = PL - (S2/S1) \cdot PG.$$

As will be apparent from the above equation, the fluid pressure Pr decreases as the governor pressure PG increases. The governor pressure is proportional to the square of the rotational speed of the output shaft O and the rotational speed of the output shaft O is proportional to the rotational speed of the clutch drum of the clutch C3. Thus, the fluid pressure Pr decreases as a function of the square of the rotational speed of the clutch drum. Since the fluid pressure created within the clutch drum by the centrifugal force is proportional to the square of the rotational speed of the clutch drum, the above mentioned fluid pressure Pr decreases as the centrifugal force increases. By setting the areas S1 and S2 to appropriate values, it is possible to let a decrease in the fluid pressure Pr due to the rotation of the clutch drum equal to an increase in fluid pressure within the clutch drum due to the centrifugal force. This means that the fluid pressure for actuating the clutch C3 can be kept substantially unaffected by the centrifugal force irrespective of the variation in rotational speed of the clutch drum. Therefore, even at high vehicle speeds, substantial shocks in effecting 4-3 downshifting are avoided. Similarly, substantial shocks in effecting 4-2 downshifting and 4-1 downshifting are avoided.

Since substantially no governor pressure is available when the vehicle moves off from the standstill, line pressure which is not reduced acts on the clutch C3, thus securing sufficiently large capacity of the clutch.

Although in the above described embodiment, the present invention has been applied to the four speed automatic transmission, the present invention may be applied to any asutomatic transmission as long as it has a cluctch which is engageable when its clutch drum is rotating.

From the preceding description, it will be appreciated that substantial shocks in effecting downshifting from the fourth speed ratio to any one of the third, second and first speed ratios are avoided.

**Claims**

1. An automatic transmission comprising :

   a plurality of fluid operated friction units which are selectively made operative and inoperative to establish, in a forward drive range, a plurality of forward speed ratios including a highest speed ratio and other forward speed ratios, said plurality of fluid operated friction units including a fluid operated clutch (C3) which is to be engaged when the transmission downshifts from the highest speed ratio to any one of the other forward speed ratios and when a manual valve (4) is moved from a neutral position to the forward drive range;
   a source of fluid pressure (2);
   means including a fluid conduit (442) communicating with said fluid operated clutch (C3), for supplying the fluid pressure from said source of fluid pressure (2) to said fluid operated clutch (C3) through said fluid conduit (442) when any one of the other forward speed ratios is established;
   a pressure accumulator (49) including a bore (140), a fluid operated piston (240) movably disposed in said bore to form within said bore a first chamber (140a) on one side of said piston (240) and a second chamber (140b), and a spring (340) disposed in said second chamber (140b) biasing said piston in a first direction, said first chamber (140a) communicating with said source of fluid pressure (2), said second chamber (140b) communicating with said fluid conduit (442),

   said piston (240) being urged to move by said spring (340) as said second chamber (140b) is pressurized with hydraulic fluid supplied thereto when said first chamber (140a) is supplied with the fluid pressure from said source of fluid pressure (2) thus retarding fluid pressure build-up within said fluid operated clutch (C3) during downshift from the highest speed ratio to any one of the other forward speed ratios or during shift from the neutral to the forward drive range,

   **characterized in that,**

   said first chamber (140a) is directly supplied with the line pressure from the pressure source (2) through a channel (402) and said clutch pressure during the build-up phase is equal to the line pressure minus the spring force on the piston.

**Revendications**

1. Transmission automatique comprenant :
   une pluralité d'unités à friction commandées par fluide qui sont sélectivement rendues opérationnelles et inopérationnelles pour établir, dans une gamme d'entraînement vers l'avant, une pluralité de rapports de vitesses vers l'avant comprenant un rapport de vitesses le plus élevé et d'autres rapports de vitesses vers l'avant, cette pluralité d'unités à friction commandées par fluide comportant un embrayage commandé par fluide (C3) qui peut être mis en prise quand la transmission rétrograde depuis le rapport de vitesses supérieur vers l'un quelconque des autres rapports de vitesses vers l'avant et quand une soupape manuelle (4) est déplacée depuis une position neutre vers la gamme d'entraînement avant;

une source de fluide sous pression (2);

des moyens comprenant un conduit à fluide (442) qui communique avec ledit embrayage commandé par fluide (C3) pour fournir du fluide sous pression depuis la source de fluide sous pression (2) vers ledit embrayage commandé par fluide (C3) par l'intermédiaire dudit conduit à fluide (442) quand l'un quelconque des autres rapports vers l'avant est établi;

un accumulateur de pression (49) comportant un orifice (140), un piston commandé par fluide (240) monté mobile à l'intérieur de l'orifice afin de former à l'intérieur de l'orifice une première chambre (140a) de l'un des côtés du piston (240) ainsi qu'une seconde chambre (140b), et un ressort (340) disposé à l'intérieur de ladite seconde chambre (140b) pour solliciter ledit piston suivant un premier sens, ladite première chambre (140a) communiquant avec la source de fluide sous pression (2), la seconde chambre (140b) communiquant avec le conduit à fluide (442),

ce piston (240) étant sollicité de manière à se déplacer sous l'effet du ressort (340) quand la seconde chambre (140b) est mise sous pression à l'aide d'un fluide hydraulique fourni à celle-ci quand la première chambre (140a) est alimentée avec le fluide sous pression provenant de la source de fluide sous pression (2), retardant ainsi la montée en pression du fluide à l'intérieur de l'embrayage commandé par fluide (C3) durant les rétrogradages depuis le rapport de vitesses le plus élevé vers l'un quelconque des autres rapports de vitesses vers l'avant où durant un changement de vitesse depuis le point mort vers une gamme d'entraînement vers l'avant,

caractérisé en ce que la première chambre (140a) est directement alimentée par la ligne de pression provenant de la source de pression (2) par l'intermédiaire d'un canal (402) et la pression à l'embrayage durant la phase de montée est égale à la pression en ligne moins la force du ressort appliquée au piston.

## Patentansprüche

1. Ein automatisches Getriebe mit:

einer Mehrzahl von fluidbetätigten Reibungseinheiten, die selektiv in und außer Funktion gesetzt werden können, um in einem Vorwärtsgangbereich eine Mehrzahl von Vorwärtsgangübersetzungsverhältnissen einzustellen, die ein höchstes Übersetzungsverhältnis und andere Vorwärtsgangübersetzungsverhältnisse umfassen, wobei die Mehrzahl von fluidbetätigten Reibungseinheiten eine erste fluidbetätigte Kupplung (C3) umfassen, welche einzurücken ist, wenn das Getriebe vom höchsten Übersetzungsverhältnis in eines der anderen Vorwärtsübersetzungsverhältnisse herunterschaltet und wenn ein manuelles Absperrorgan (4) von einer neutralen Position in den Vorwärtsgangbereich bewegt wird;

einer Fluiddruckquelle (2);

einer Einrichtung, die eine Fluidleitung (442) aufweist, welche mit der fluidbetätigten Kupplung (C3) zum Zuführen von Fluiddruck von der Fluiddruckquelle (2) zu der fluidbetätigten Kupplung (C3) durch die Fluidleitung (442) verbunden ist, wenn eines der anderen Vorwärtsgangübersetzungsverhältnisse eingestellt ist;

einen Druckspeicher (49) mit einer Bohrung (140), einem fluidbetätigten Kolben (240), der beweglich in der Bohrung zur Bildung einer ersten Kammer (140a) in der Bohrung auf einer Seite des Kolbens (240) und einer zweiten Kammer (140b) angeordnet ist, und eine Feder (340) aufweist, die in der zweiten Kammer (140b) angeordnet ist, die den Kolben in eine erste Richtung vorbelastet, wobei die erste Kammer (140a) mit der Fluiddruckquelle (2) in Vebindung steht, wobei die zweite Kammer (140b) mit der Fluidleitung (442) in Verbindung steht,

wobei der Kolben (240) dazu veranlaßt wird, sich aufgrund der Feder (340) zu bewegen, wenn die zweite Kammer (140b) mit zugeführtem Hydraulikfluid unter Druck gesetzt wird, wenn die erste Kammer (140a) mit Fluiddruck von der Fluiddruckquelle (2) versorgt wird, wodurch der Aufbau von Fluiddruck innerhalb der fluidbetätigten Kupplung (C3) während des Herunterschaltens von dem höchsten Übersetzungsverhältnis zu einem der anderen Vorwärtsübersetzungsverhältnisse oder während des Schaltens vom neutralen Bereich in den Vorwärtsgangbereich verzögert wird, **dadurch**

**gekennzeichnet,**

daß die erste Kammer (140a) direkt mit dem Leitungsdruck von der Fluiddruckquelle (2) durch eine Leitung (402) versorgt wird, und daß der Kupplungsdruck während der Aufbauphase gleich dem Leitungsdruck minus der Federkaft auf den Kolben ist.

# FIG.1

EP 0 307 511 B1

FIG.2(a)

FIG.2(b)

EP 0 307 511 B1

FIG.2(c)

EP 0 307 511 B1

# FIG.3